# EUROPÄISCHE PATENTANMELDUNG

(11) **EP 3 088 407 A1**
(43) Veröffentlichungstag der Anmeldung: **02.11.2016**
(21) Anmeldenummer: 16165368.8
(22) Anmeldetag: 14.04.2016
(51) Int. Cl.: C07F 9/6574, B01J 31/22

(54) **NEUE MONOPHOSPHITVERBINDUNGEN MIT EINER ESTERGRUPPE**

(30) Priorität: 29.04.2015 DE 102015207866
(71) Anmelder: Evonik Degussa GmbH, 45128 Essen (DE)
(72) Erfinder: Dyballa, Katrin Marie, 45657 Recklinghausen (DE); Franke, Robert, 45772 Marl (DE)

(57) **Zusammenfassung**

Neue Monophosphitverbindungen mit einer Estergruppe, sowie ein Verfahren zur Herstellung dieser Verbindungen, die insbesondere zur Verwendung als Liganden in Hydroformylierungsreaktionen geeignet sind.

## Beschreibung

Die vorliegende Erfindung betrifft neue Monophosphitverbindungen mit einer Estergruppe sowie ein Verfahren zur Herstellung der Verbindungen, die insbesondere zur Verwendung als Liganden in Hydroformylierungsreaktionen geeignet sind. Die Erfindung betrifft weiterhin auch Komplexe, die zumindest eine dieser Monophosphitverbindungen aufweisen sowie die Verwendung der vorgenannten Verbindungen und/oder Komplexe in Hydroformylierungsreaktionen.

Die Reaktionen zwischen Olefinverbindungen, Kohlenmonoxid und Wasserstoff in Gegenwart eines Katalysators zu den um ein C-Atom reicheren Aldehyden ist als Hydroformylierung bzw. Oxierung bekannt. Als Katalysatoren in diesen Reaktionen werden häufig Verbindungen der Übergangsmetalle der VIII. Gruppe des Periodensystems der Elemente verwendet. Bekannte Liganden sind beispielsweise Verbindungen aus den Klassen der Phosphine, Phosphite und Phosphonite mit jeweils dreiwertigem Phosphor P^{III}.

Eine gute Übersicht über den Stand der Hydroformylierung von Olefinen findet sich in B. CORNILS, W. A. HERRMANN, "Applied Homogeneous Catalysis with Organometallic Compounds", Vol. 1 & 2, VCH, Weinheim, New York, 1996 bzw. R. Franke, D. Selent, A. Börner, "Applied Hydroformylation", Chem. Rev., 2012, DOI:10.1021/cr3001803.

Jede katalytisch aktive Zusammensetzung hat ihre spezifischen Vorzüge. Je nach Einsatzstoff und Zielprodukt kommen daher unterschiedliche katalytisch aktive Zusammensetzungen zum Einsatz.

Der Nachteil von zwei- und mehrzähnigen Phosphinliganden ist ein relativ hoher Aufwand, der zu ihrer Darstellung notwendig ist. Daher ist es oftmals nicht rentabel, solche Systeme in technischen Prozessen einzusetzen. Hinzu kommt eine vergleichsweise geringe Aktivität, die durch hohe Verweilzeiten reaktionstechnisch kompensiert werden muss. Dies wiederum führt zu unerwünschten Nebenreaktionen der Produkte.

In Angew. Chem. Int. Ed. 2000, 39, No. 9, S.1639-1641 von Börner et al. werden Liganden beschrieben, welche eine P-C- und zwei P-O-Bindungen aufweisen, es handelt sich somit um Phosphonite. Die dort beschriebenen Phosphonite weisen bei einem Einsatz in der Hydroformylierung n/iso-Selektivitäten (n/iso = das Verhältnis von linearem Aldehyd (= n) zu verzweigtem (= iso) Aldehyd)) von 0,61 bis 1,57 auf.

Die in DE 199 54 721 A1 beschriebenen Phosphonitliganden weisen eine gute n/iso-Selektivität auf. Allerdings haben Untersuchungen ergeben, dass die Verbindung II-c (in DE 199 54 721; Seite 6) zu einer photochemisch induzierten Zersetzung neigt. Aufgrund der Instabilität der Verbindung ist diese nicht lagerfähig, weshalb die Verwendung der Verbindung als Ligand in der Katalyse großtechnisch nicht wirtschaftlich ist. Von einem großtechnischen Einsatz der Verbindung ist daher abzusehen.

Ein weiterer Nachteil von Liganden mit einer Phosphonitstruktur besteht in der sehr aufwändigen Herstellung. Die Möglichkeit einer günstigen und einfachen Synthese spielt jedoch für den Einsatz von Liganden in einem großtechnischen Prozess eine elementare Rolle, da die Produktionskosten für einen Liganden nur so hoch sein dürfen, dass die Rentabilität des Gesamtprozesses, in dem der Ligand später eingesetzt wird, weiterhin gewährleistet bleibt.

Rhodium-Monophosphit-Komplexe in katalytisch aktiven Zusammensetzungen sind geeignet für die Hydroformylierung von verzweigten Olefinen mit innenständigen Doppelbindungen.

Aus EP 0 155 508 ist die Verwendung von bisarylensubstituierten Monophosphiten bei der rhodiumkatalysierten Hydroformylierung von sterisch gehinderten Olefinen, z. B. Isobuten, bekannt. Hierbei werden jedoch z.T. sehr hohe Rhodiumkonzentrationen verwendet (u.a. 250 ppm), was in Anbetracht des derzeitigen Rhodiumpreises für ein großtechnisches Verfahren nicht wirtschaftlich ist.

Gegenüber dem bekannten Stand der Technik ist es die Aufgabe der vorliegenden Erfindung, alternative Liganden und diese aufweisende Komplexe zum Einsatz in Hydroformylierungsreaktionen bereitzustellen, die die im Zusammenhang mit den vorbekannten Liganden aufgezeigten Nachteile nicht aufweisen. Insbesondere sollen die neuen Liganden vorzugsweise mit geringerem Aufwand und entsprechend auch mit geringeren Kosten synthetisierbar sein als die aus dem Stand der Technik bekannten Liganden. Bevorzugt sollen die neuen Liganden auch in der großtechnischen Hydroformylierung einsetzbar sein.

Diese Aufgabe wird gelöst durch Verbindungen gemäß Anspruch 1. Insbesondere wird die Aufgabe gelöst durch Monophosphitverbindungen, die eine der beiden allgemeinen Strukturen **I** oder **II** aufweisen oder daraus bestehen: 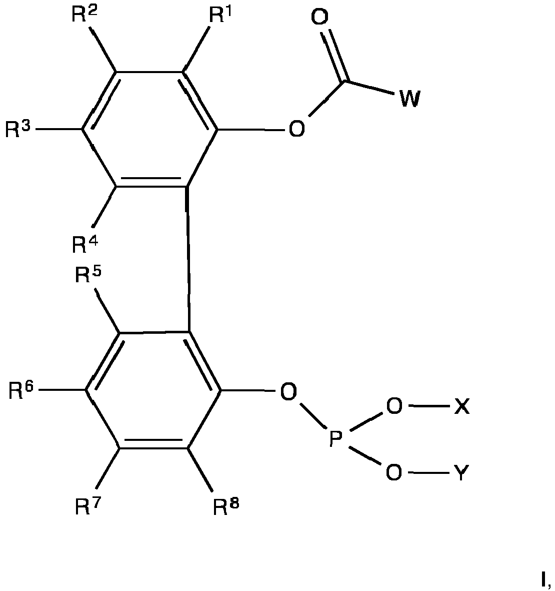 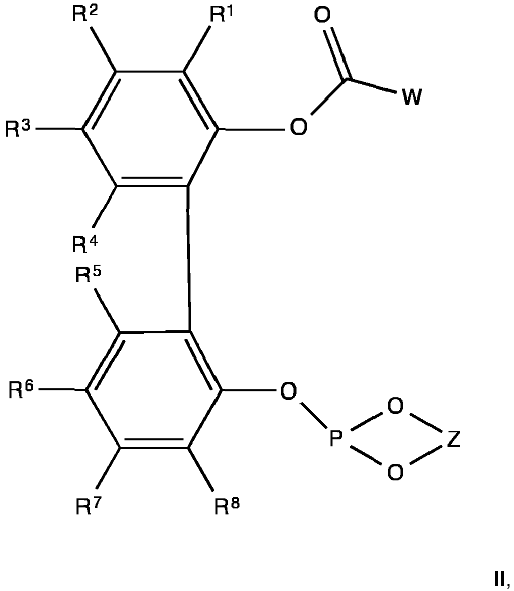
wobei W ausgewählt ist aus: -(C₁-C₁₂)-Alkyl, -(C₆-C₂₀)-Aryl, -CH₂CH₂COCH₃, -C(CH₃)₃, -C₆H₅, -9-fluoren;
wobei R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
wobei X und Y jeweils unabhängig voneinander ausgewählt sind aus: -(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₁-C₁₂)-Alkyl-(C₆-C₂₀)-Aryl,-(C₆-C₂₀)-Aryl-COO-(C₁-C₁₂)-Alkyl,-(C₆-C₂₀)-Aryl-CONH-(C₁-C₁₂)-Alkyl,-(C₆-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₅-C₈)-Heterocycloalkyl, -(C₆-C₂₀)-Aryl-CO-(C₆-C₂₀)-Aryl;
und wobei Z ausgewählt ist aus: -(C₁-C₁₂)-Alkyl- -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀)-Aryl-CO-(C₆-C₂₀)-Aryl-, -(C₆-C₂₀)-Aryl-(C₆-C₂₀)-Aryl-.
   (C₁-C₁₂)-Alkyl und O-(C₁-C₁₂)-Alkyl können jeweils unsubstituiert oder durch einen oder mehrere gleiche oder verschiedene Reste substituiert sein, die ausgewählt sind unter (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₃-C₁₂)-Cycloalkyl und (C₃-C₁₂)-Heterocycloalkyl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₆-C₂₀)-Aryl und -(C₆-C₂₀)-Aryl-(C₆-C₂₀)-Aryl- können jeweils unsubstituiert oder durch einen oder mehrere gleiche oder verschiedene Reste substituiert sein, die ausgewählt sind unter -H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I),-COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -NH₂, -N[(C₁-C₁₂)-Alkyl]₂.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, ido-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Diemthylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge einen oder mehrere Substituenten aufweisen. Die Substituenten sind vorzugsweise unabhängig voneinander ausgewählt unter -(C₃-C₁₂)-Cycloalkyl,-(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-,-N-, -N(=O)-, -C(=O)- oder -S(=O)-. Beispiele für -(C₃-C₁₂)-Heterocycloalkylgruppen Tetrahydrothiophenyl, Tetrhydrofuryl, Tetrahydropyranyl und Dioxanyl.

Substituierte -(C₃-C₁₂)-Cycloalkylgruppen und substituierte -(C₃-C₁₂)-Heterocycloalkylgruppen können, in Abhängigkeit von ihrer Ringgröße, einen oder mehrere (z.B. 1, 2, 3, 4 oder 5) weitere Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl. Substituierte -(C₃-C₁₂)-Cycloalkylgruppen tragen vorzugsweise eine oder mehrere -(C₁-C₆)-Alkylgruppen. Substituierte-(C₃-C₁₂)-Heterocycloalkylgruppen tragen vorzugsweise eine oder mehrere -(C₁-C₆)-Alkylgruppen.

Der Ausdruck -(C₆-C₂₀)-Aryl und -(C₆-C₂₀)-Aryl-(C₆-C₂₀)-Aryl- umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl und -(C₆-C₁₀)-Aryl-(C₆-C₁₀)-Aryl-. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter -H,-(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I), -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -NH₂, -N[(C₁-C₁₂)-Alkyl]₂.

Substituierte -(C₆-C₂₀)-Arylgruppen und -(C₆-C₂₀)-Aryl-(C₆-C₂₀)-Arylgruppen sind vorzugsweise substituierte -(C₆-C₁₀)-Arylgruppen und -(C₆-C₁₀)-Aryl-(C₆-C₁₀)-Arylgruppen, insbesondere substituiertes Phenyl oder substituiertes Naphthyl oder substituiertes Anthracenyl. Substituierte -(C₆-C₂₀)-Arylgruppen tragen vorzugsweise einen oder mehrere, z.B. 1, 2, 3, 4 oder 5 Substituenten, ausgewählt unter -(C₁-C₁₂)-Alkylgruppen, -(C₁-C₁₂)-Alkoxygruppen.

Obwohl in den Verbindungen gemäß den Formeln **I** und **II** generell alle vorgenannten Substituenten mögliche Substituenten für die als R¹ bis R⁸ bezeichneten Reste sind, handelt es sich bei -H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CO-(C₁-C₁₂)-Alkyl, -CO-(C₆-C₂₀)-Aryl, -COOH, -OH, -SO₃H, -NO₂, -CN, -NH₂, -N[(C₁-C₁₂)-Alkyl]₂ um bevorzugte Substituenten für R¹ bis R⁸. Insbesondere sind als Substituenten für R¹ bis R⁸ bevorzugt-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -OH, -NO₂, -NH₂.

In einer Ausführungsform sind R¹ bis R⁸ bevorzugt -H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I.

In einer Ausführungsform sind R¹ bis R⁸ bevorzugt -H, -(C₁-C₁₂)-Alkyl, -O-(C₁-C₁₂)-Alkyl, -O-(C₆-C₂₀)-Aryl, -(C₆-C₂₀)-Aryl, besonders bevorzugt davon sind -H, -(C₁-C₁₂)-Alkyl und -O-(C₁-C₁₂)-Alkyl.

In einer Ausführungsform stehen R³ und R⁶ für -O-(C₁-C₁₂)-Alkyl.

In einer Ausführungsform stehen R³ und R⁶ für -OMe.

In einer Ausführungsform stehen R¹ und R⁸ für -(C₁-C₁₂)-Alkyl.

In einer Ausführungsform stehen R¹ und R⁸ für *tert*-Butyl.

In einer Ausführungsform stehen R¹, R³, R⁶ und R⁸ für -(C₁-C₁₂)-Alkyl.

In einer Ausführungsform stehen R¹, R³, R⁶ und R⁸ für Methyl.

In einer Ausführungsform stehen R¹, R³, R⁶ und R⁸ für *tert*-Butyl.

In einer Ausführungsform stehen R¹, R², R³, R⁴, R⁵, R⁶, R⁷ und R⁸ für -H.

In einer Ausführungsform sind bevorzugte Substituenten für W ausgewählt unter: -(C₁-C₁₂)-Alkyl, -(C₆-C₂₀)-Aryl, -CH₂CH₂COCH₃, -C₆H₅, -C(CH₃)₃ und -9-fluoren.

In einer Ausführungsform sind bevorzugte Substituenten für W ausgewählt unter: -CH₂CH₂COCH₃, -C₆H₅ und -C(CH₃)₃.

Von den vorgenannten Substituenten X und Y in Verbindungen gemäß Formel **I** sind insbesondere - (C₁-C₁₂)-Alkyl, -(C₆-C₂₀)-Aryl, -(C₆-C₂₀)-Aryl-(C₁-C₁₂)-Alkyl, -(C₁-C₁₂)-Alkyl-(C₆-C₂₀)-Aryl, -(C₄-C₂₀)-Heteroaryl und -(C₅-C₈)-Cycloalkyl als Substituenten bevorzugt.

In einer Ausführungsform stehen X und Y für die gleichen Reste.

Von den vorgenannten möglichen Substituenten für Z in Verbindungen gemäß Formel **II** sind -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-und -(C₆-C₂₀)-Aryl-(C₆-C₂₀)-Aryl- als Substituenten bevorzugt. Besonders bevorzugte Substituenten Z weisen zumindest einen Phenylring und vorzugsweise zwei oder optional mehr Phenylringe auf, wobei die Phenylringe optional substituiert sind, insbesondere mit (C₁-C₁₂)-Alkylresten oder mit -O-(C₁-C₁₂)-Alkylresten.

In einer Ausführungsform steht Z für:

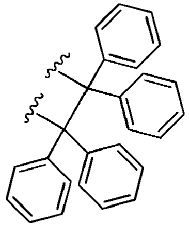

In einer weiteren Ausführungsform steht Z für -(C₆-C₂₀)-Aryl-(C₆-C₂₀)-Aryl-.

In einer Ausführungsform weist die Verbindung die allgemeine Struktur **III** auf: 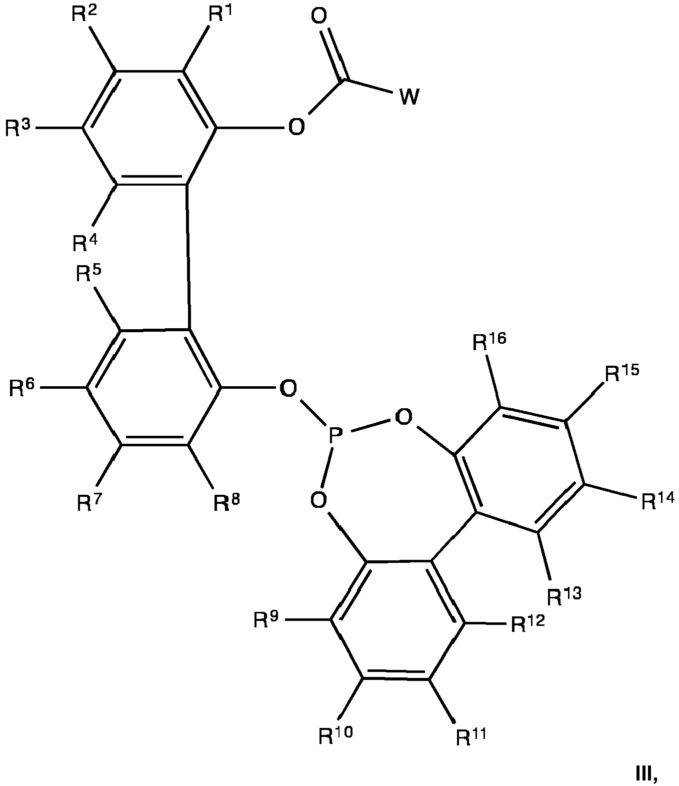
wobei R¹, R², R³, R⁴, R⁵, R⁶, R⁷, R⁸ und W so definiert sind wie im Zusammenhang mit Verbindungen gemäß Formeln **I** und **II** angegeben,
und wobei R⁹, R¹⁰, R¹¹, R¹², R¹³, R¹⁴, R¹⁵, R¹⁶ jeweils unabhängig voneinander ausgewählt sind aus:
   -H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I),-COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

In einer Ausführungsform sind R⁹, R¹⁰, R¹¹, R¹², R¹³, R¹⁴, R¹⁵, R¹⁶ jeweils unabhängig voneinander ausgewählt aus:
-H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH,-OH, -NH₂, -N[(C₁-C₁₂)-Alkyl]₂.

In einer Ausführungsform sind R⁹, R¹⁰, R¹¹, R¹², R¹³, R¹⁴, R¹⁵, R¹⁶ jeweils unabhängig voneinander ausgewählt aus:
-H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - N[(C₁-C₁₂)-Alkyl]₂.

In einer Ausführungsform sind R⁹, R¹⁰, R¹¹, R¹², R¹³, R¹⁴, R¹⁵, R¹⁶ jeweils unabhängig voneinander ausgewählt aus:
-H, -(C₁-C₁₂)-Alkyl, -O-(C₁-C₁₂)-Alkyl, -(C₆-C₂₀)-Aryl,
wobei Alkyl 1-12 Kohlenstoffatome, bevorzugt 1-10 Kohlenstoffatome z.B. primäre, sekundäre oder tertiäre Alkylgruppe, wie Methyl-, Ethyl-, n-Propyl-, Isopropyl-, Butyl-, sec-Butyl-, t-Butyl-, t-Butylethyl-, t-Butylpropyl-, n-Hexyl-, Amyl-, sec-Amyl-, t-Amyl-, iso-Octyl-, 2-Ethylhexyl-, Decyl-, Dodecyl- und Octadecylgruppen umfasst.

In einer Ausführungsform stehen R¹¹ und R¹⁴ für -O-(C₁-C₁₂)-Alkyl.

In einer Ausführungsform stehen R¹¹ und R¹⁴ für-OMe.

In einer Ausführungsform stehen R⁹ und R¹⁶ für -(C₁-C₁₂)-Alkyl.

In einer Ausführungsform stehen R⁹ und R¹⁶ für *tert*-Butyl.

In einer Ausführungsform stehen R⁹, R¹¹, R¹⁴ und R¹⁶ für -(C₁-C₁₂)-Alkyl.

In einer Ausführungsform stehen R⁹, R¹¹, R¹⁴ und R¹⁶ für Methyl.

In einer Ausführungsform stehen R⁹, R¹¹, R¹⁴ und R¹⁶ für *tert*-Butyl.

In einer Ausführungsform stehen R⁹, R¹⁰, R¹¹, R¹², R¹³, R1⁴, R¹⁵ und R¹⁶ für -H.

In bevorzugten Ausführungsformen weisen erfindungsgemäße Monophosphitverbindungen eine der acht folgenden allgemeinen Strukturen **IV, V, VI, VII, VIII, IX, X** oder **XI** auf:

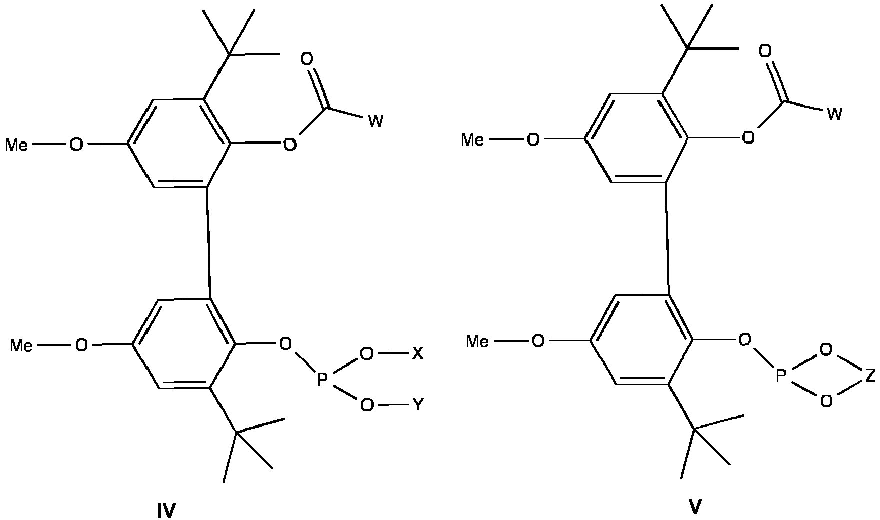

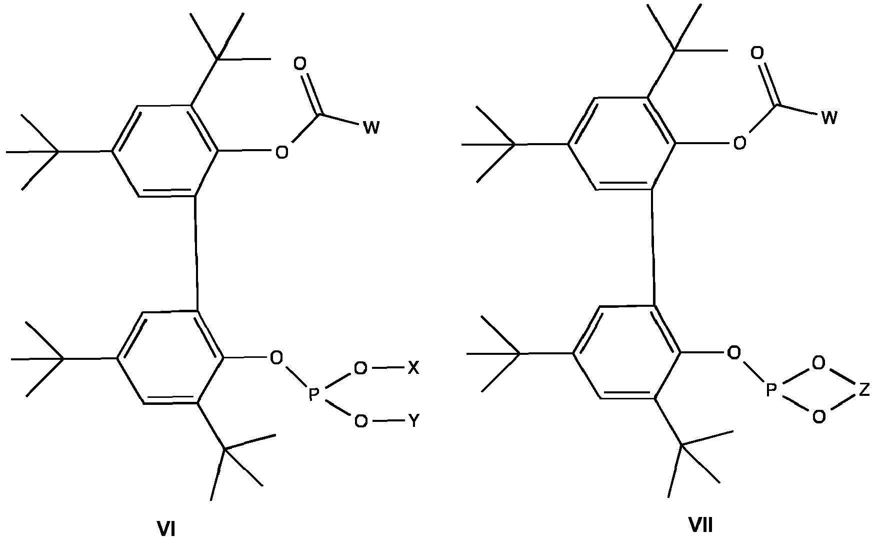

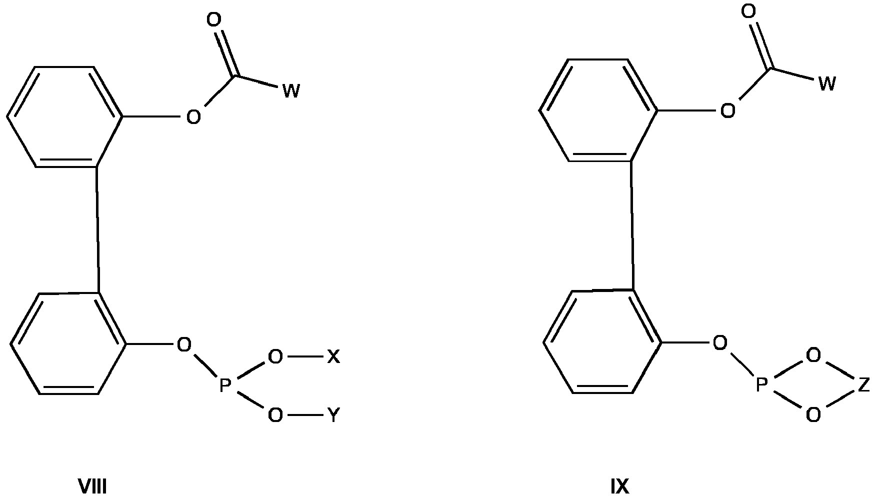

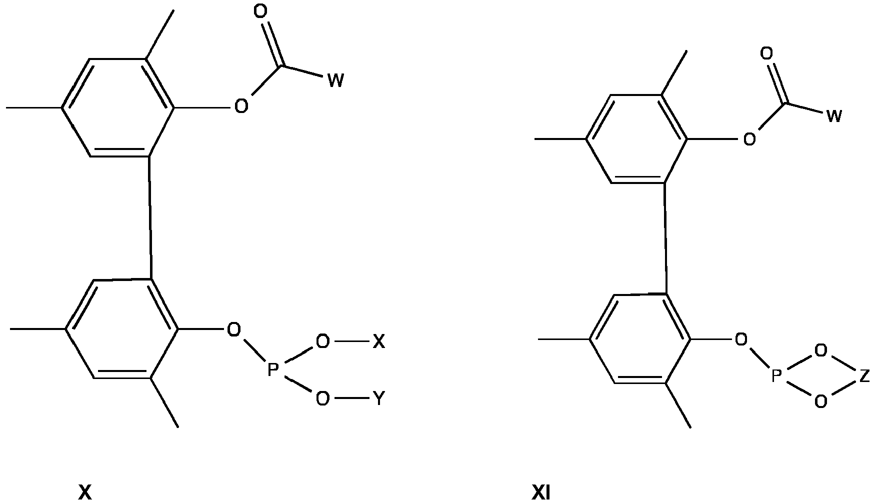

Die Erfindung betrifft weiterhin auch ein Verfahren zur Herstellung von Verbindungen, welche eine der beiden allgemeinen Strukturen **I** oder **II** aufweisen: 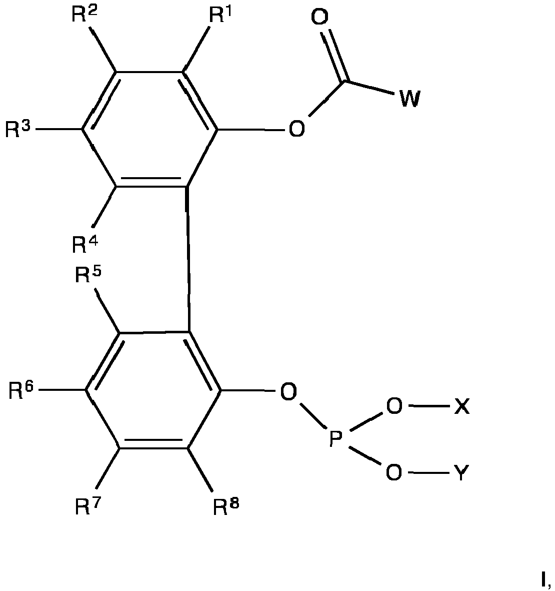 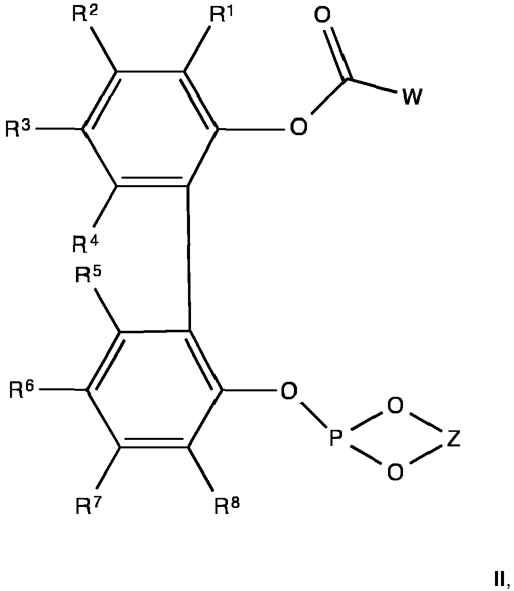
wobei W ausgewählt ist aus: -(C₁-C₁₂)-Alkyl, -(C₆-C₂₀)-Aryl, -CH₂CH₂COCH₃, -C(CH₃)₃, -C₆H₅, -9-fluoren;
wobei R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂-C₁₂)Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
wobei X und Y jeweils unabhängig voneinander ausgewählt sind aus: -(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₁-C₁₂)-Alkyl-(C₆-C₂₀)-Aryl,-(C₆-C₂₀)-Aryl-COO-(C₁-C₁₂)-Alkyl,-(C₆-C₂₀)-Aryl-CONH-(C₁-C₁₂)-Alkyl,-(C₆-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₅-C₈)Heterocycloalkyl, -(C₆-C₂₀)-Aryl-CO-(C₆-C₂₀)-Aryl;
und wobei Z ausgewählt ist aus:
   -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀)-Aryl-CO-(C₆-C₂₀)-Aryl-, -(C₆-C₂₀)-Aryl-(C₆-C₂₀)-Aryl-;
und wobei die genannten Alkyl-, Heteroalkyl-, Cycloalkyl-, Heterocycloalkyl-, Aryl- und Heteroarylgruppen optional substituiert sind, insbesondere jeweils unabhängig voneinander mit -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂.

Das erfindungsgemäße Verfahren zur Herstellung von Monophosphitverbindungen weist dabei die folgenden Schritte a) - d) auf, deren Reihenfolge nicht notwendigerweise der Reihenfolge ihrer Nennung entsprechen muss:
a) Vorlegen eines Eduktes,
b) Zugabe eines Carbonsäurechlorids,
c) Zugabe einer Verbindung, die Phosphor und Chlor enthält oder daraus besteht, und
d) Erhalten eines Produktes.

Exemplarisch werden im Folgenden drei Ausführungsformen des erfindungsgemäßen Herstellungsverfahrens in vereinfachter Form dargestellt. Es wird darauf hingewiesen, dass die in der Beschreibung der einzelnen Ausführungsformen des Verfahrens beispielhaft erwähnten Basen durch andere, dem Fachmann bekannte Basen ersetzt werden können, und dass nach Bedarf in allen Schritten zusätzlich Base verwendet werden kann.

Die erste Ausführungsform des erfindungsgemäßen Verfahrens zur Herstellung von Verbindungen mit einer Struktur gemäß Formel **I** oder **II** umfasst im Wesentlichen drei Synthesestufen, die in den Reaktionsschemata 1a und 1b dargestellt sind. In Reaktionsschema 1a ist die Herstellung von Monophosphitverbindungen mit einer Struktur gemäß Formel **I** dargestellt:

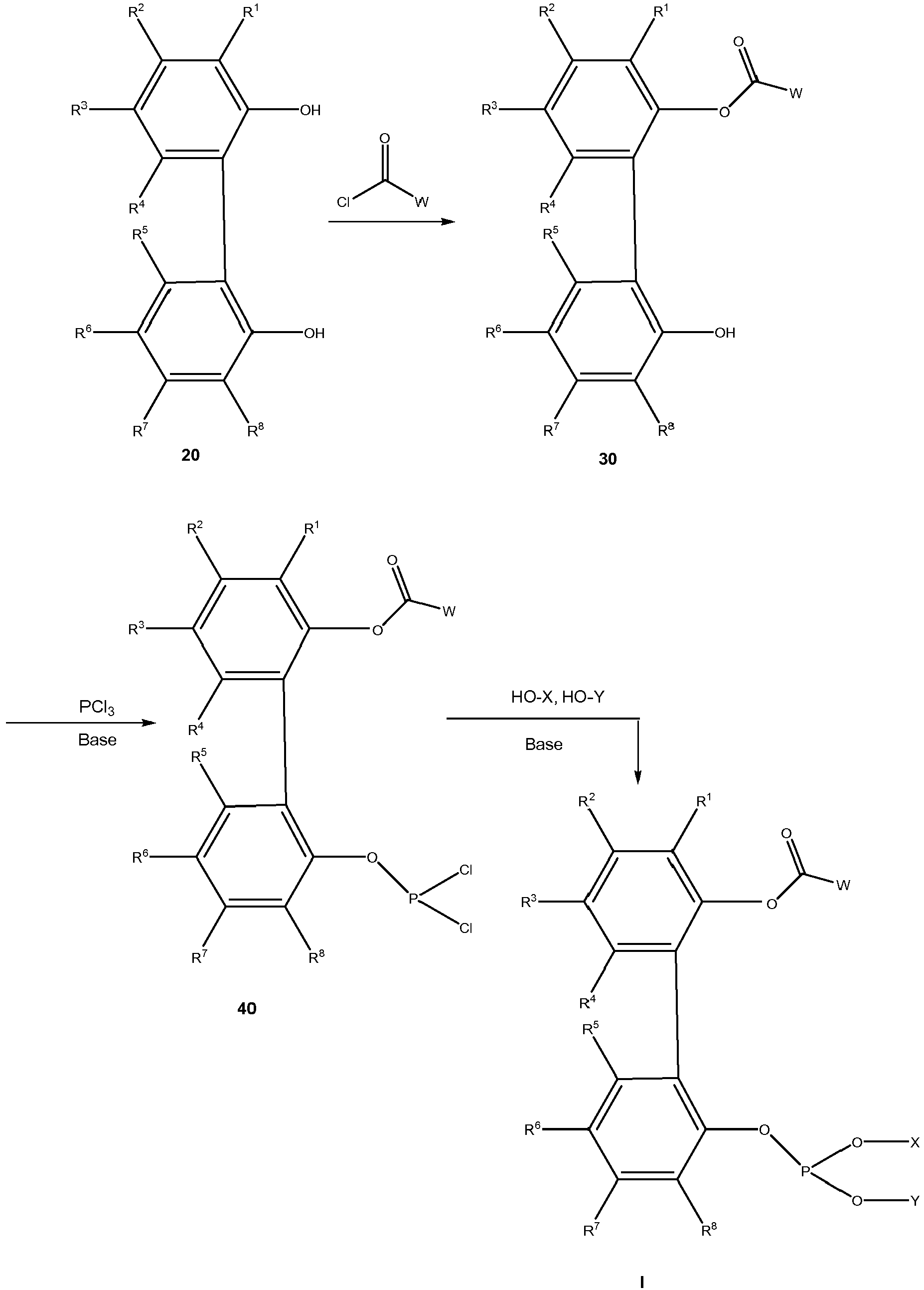

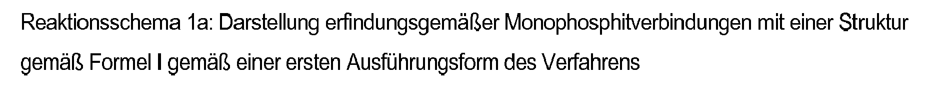

In der ersten Stufe der in Reaktionsschema 1a gezeigten Synthese von Verbindungen mit einer Struktur gemäß Formel **I** erfolgt eine Veresterung der in para-Stellung zu dem Substituenten R³ befindlichen Hydroxylgruppe eines Biphenol-Derivates **20** durch Reaktion mit einem die Gruppe W aufweisenden Carbonsäurechlorid, wodurch die Verbindung **30** erhalten wird. Für die Zwecke der Erfindung weist ein Carbonsäurechlorid die allgemeine Struktur 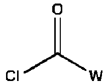 auf, wobei W definiert ist wie im Zusammenhang mit Formel **I** angegeben.

In der zweiten Synthesestufe wird PCl₃ zu der veresterten Verbindung **30** gegeben, welches in Anwesenheit einer Base, z.B. Triethylamin, mit der unveresterten Hydroxylgruppe (in para-Stellung zu dem Substituenten R⁶) unter HCl-Abspaltung bzw. unter Bildung des entsprechenden Aminhydrochlorids, das durch Reaktion der Base mit dem freiwerdenden HCl gebildet wird, zum Chlorophosphit **40** reagiert.

Selbstverständlich können auch andere dem Fachmann bekannte Basen verwendet werden, z.B. anorganische Basen wie n-BuLi (Butyllithium) oder Ko*t*Bu (Kalium-*tert*-butylat). In diesem Fall würde dann nicht das entsprechende Aminhydrochlorid, sondern die korrespondierenden Alkalichloride (LiCl bzw. KCl) gebildet werden. Gleiches gilt für andere organische Basen wie beispielsweise Pyridin- und Imidazolderivate. Hierbei entstehen dann die daraus resultierenden Basenhydrochloride.

In der dritten Synthesestufe erfolgt durch Reaktion mit den Alkoholen HO-X und HO-Y ebenfalls unter HCl-Abspaltung bzw. unter Bildung des durch Reaktion der Base, z.B. Triethylamin, mit dem freiwerdenden HCl gebildeten Aminhydrochlorids die Umsetzung zur Monophosphitverbindung gemäß Formel **I**.

In Reaktionsschema 1b ist die Herstellung von Monophosphitverbindungen mit einer Struktur gemäß Formel **II** dargestellt:

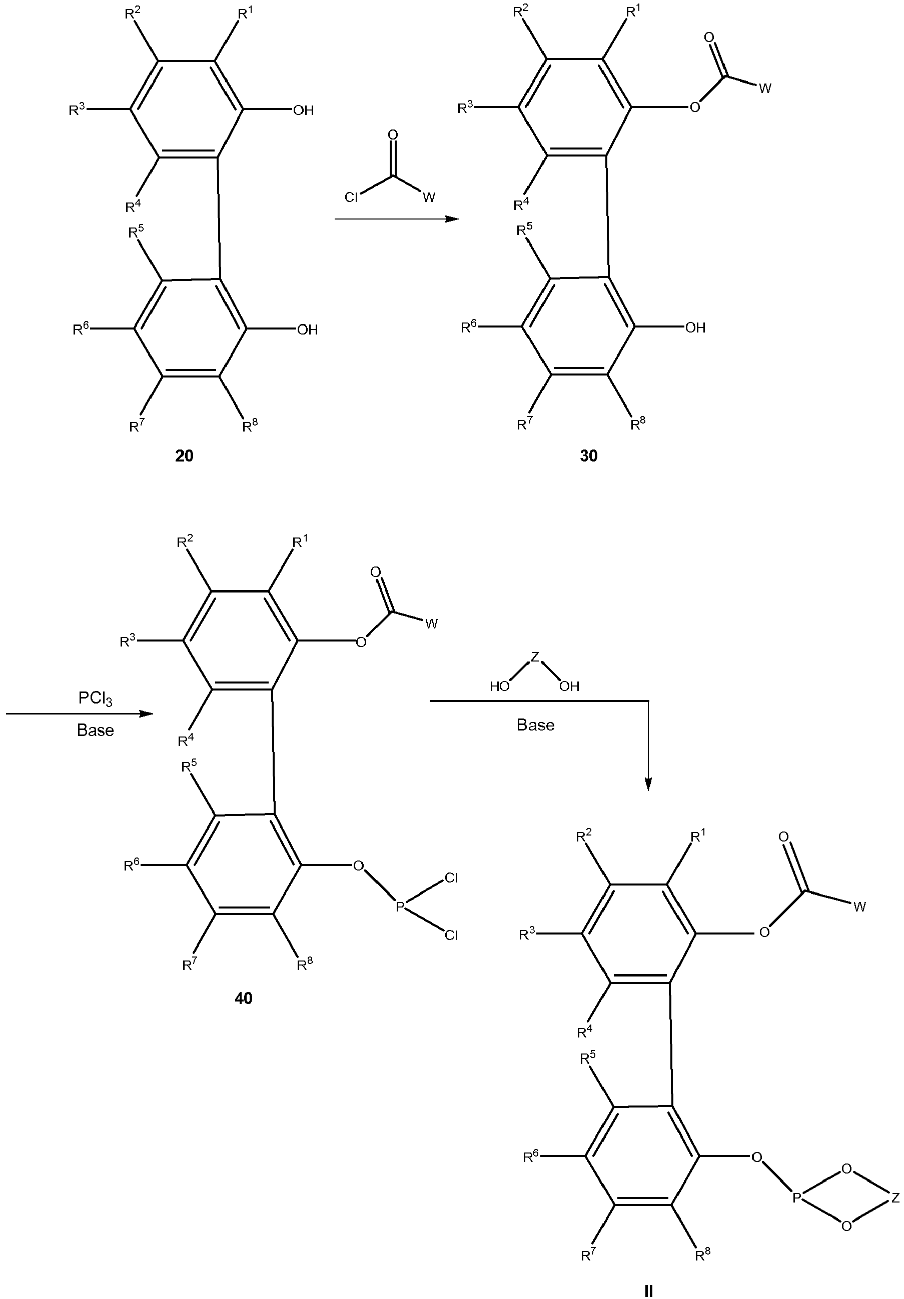

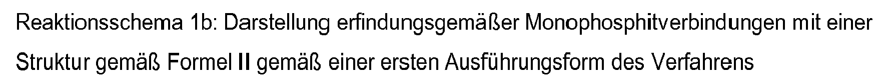

Die in Reaktionsschema 1 b gezeigte Synthese von Verbindungen mit einer Struktur gemäß Formel **II** erfolgt bis zur Herstellung des Chlorophosphits **40** identisch zu der in Reaktionsschema 1a gezeigten Synthese von Verbindungen mit einer Struktur gemäß Formel **I**. Das Chlorophosphit **40** wird dann jedoch abweichend von der in Reaktionsschema 1a gezeigten Synthese nicht mit den Alkoholen HO-X und HO-Y, sondern mit einem die Gruppe Z aufweisenden Diol zur Monophosphitverbindung mit einer Struktur gemäß Formel **II** umgesetzt.

Zusammenfassend zeichnet sich das erfindungsgemäße Verfahren in der ersten Ausführungsform also durch das Vorhandensein des Chlorophosphits **40** als Zwischenstufe aus.

Die zweite Ausführungsform des erfindungsgemäßen Verfahrens zur Herstellung von Verbindungen mit einer Struktur gemäß Formel **I** oder **II** umfasst im Wesentlichen zwei Synthesestufen. In Reaktionsschema 2a ist die Herstellung von Monophosphitverbindungen mit einer Struktur gemäß Formel **I** dargestellt, während in Reaktionsschema 2b die Herstellung von Monophosphitverbindungen mit einer Struktur gemäß Formel **II** dargestellt ist.

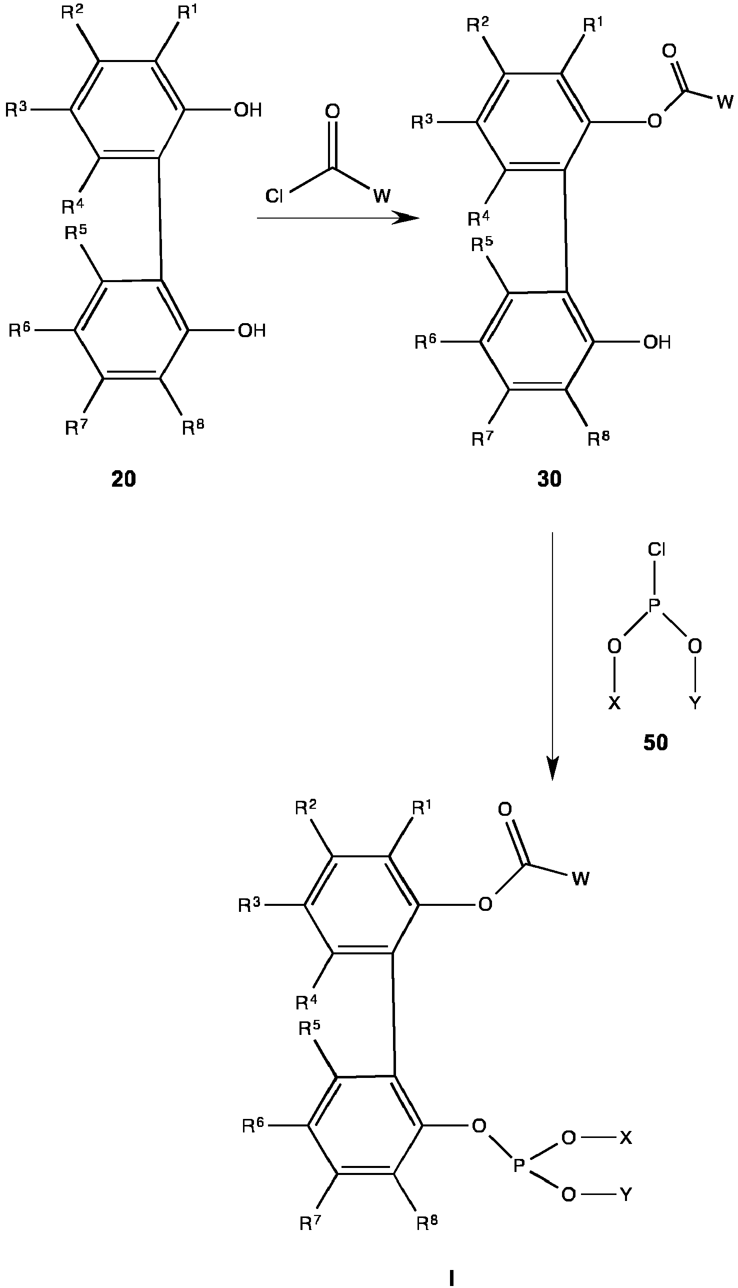

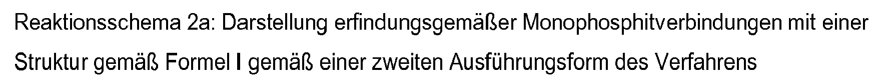

Gemäß der in Reaktionsschema 2a gezeigten Ausführungsform des erfindungsgemäßen Verfahrens erfolgt in der ersten Synthesestufe zunächst eine Veresterung einer Hydroxylgruppe eines Biphenol-Derivates **20** durch Reaktion mit einem die Gruppe W aufweisenden Carbonsäurechlorid (wobei W definiert ist wie im Zusammenhang mit Formel **I** angegeben). Dieser Syntheseschritt entspricht dem der ersten Synthesestufe gemäß der in den Reaktionsschemata 1a und 1 b gezeigten ersten Ausführungsform des erfindungsgemäßen Verfahrens.

Das veresterte Reaktionsprodukt **30** der ersten Synthesestufe wird nun im Gegensatz zu der ersten Ausführungsform des erfindungsgemäßen Verfahrens nicht zu einem Chlorophosphit umgesetzt, sondern mit einem Chlorophosphit, nämlich dem Chlorophosphit der allgemeinen Struktur **50**. Synthesewege zur Herstellung von Chlorophosphiten sind dem Fachmann hinlänglich bekannt, darüber hinaus wird an späterer Stelle die Synthese ausgewählter Chlorophosphite beschrieben. Als Reaktionsprodukt der zweiten Synthesestufe entsteht eine erfindungsgemäße Monophosphitverbindung mit einer Struktur gemäß Formel **I**.

Erfindungsgemäße Monophosphitverbindungen mit einer Struktur gemäß Formel **II** sind gemäß der zweiten Ausführungsform des erfindungsgemäßen Verfahrens entsprechend des in Reaktionsschema 2b dargestellten Syntheseweges erhältlich.

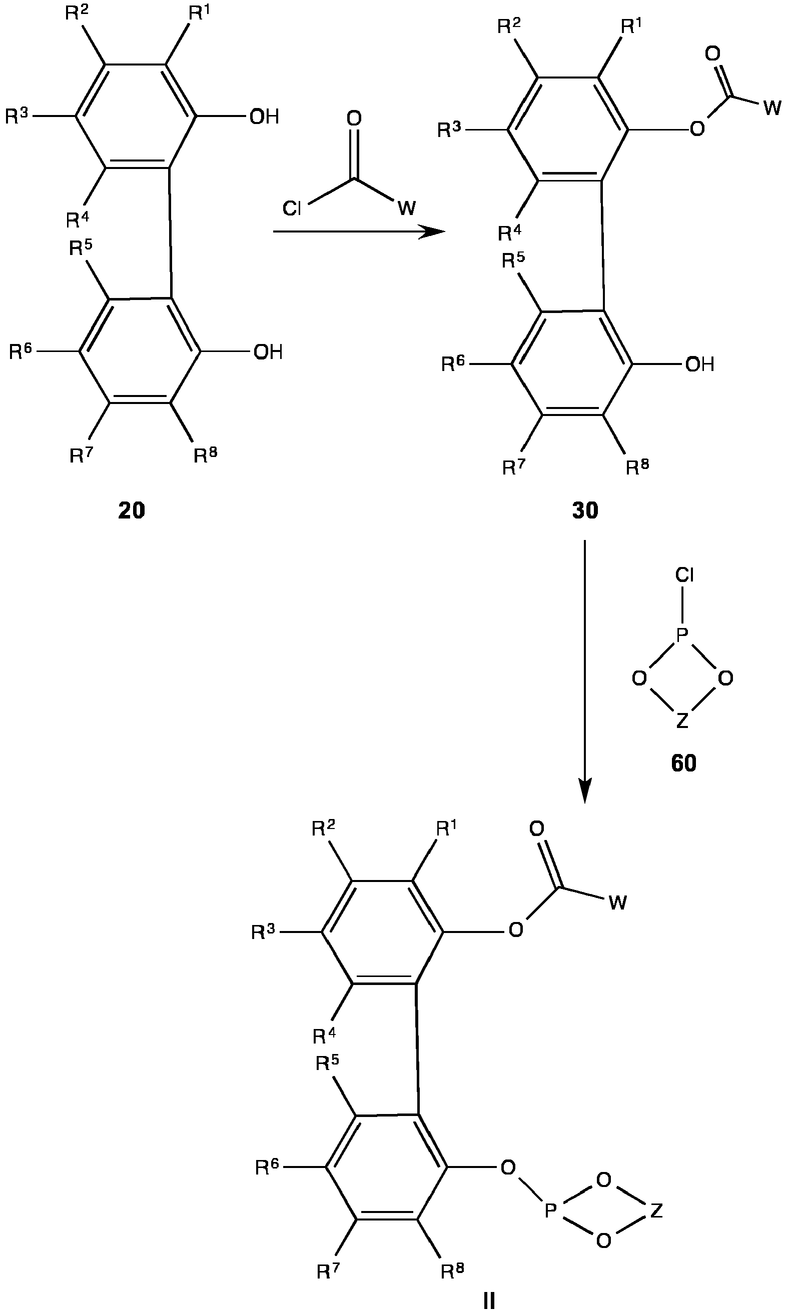

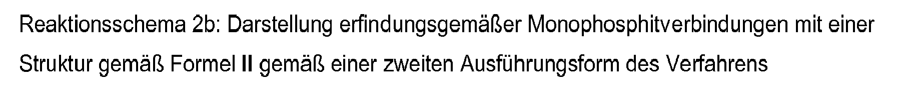

Die erste Synthesestufe des in Reaktionsschema 2b gezeigten Verfahrens ist die bereits aus dem Reaktionsschema 2a bekannte Veresterung der Verbindung **20** zu dem Zwischenprodukt **30**. In der zweiten Synthesestufe erfolgt wie auch auf dem in Reaktionsschema 2a gezeigten Reaktionsweg die Umsetzung der Verbindung **30** mit einem Chlorophosphit. Dieses hat jedoch eine von dem in der Reaktion gemäß Reaktionsschema 2a verwendeten Chlorophosphit abweichende Struktur, nämlich die Struktur gemäß der allgemeinen Formel **60**, sodass als Reaktionsprodukt die Monophosphitverbindung mit einer Struktur gemäß Formel **II** entsteht. Wie bereits im Zusammenhang mit dem in Reaktionsschema 2a gezeigten Syntheseweg erwähnt, sind dem Fachmann Wege zur Herstellung von Chlorophosphiten hinlänglich bekannt. Die Herstellung ausgewählter Chlorophosphite wird darüber hinaus an späterer Stelle beschrieben.

Zusammenfassend zeichnet sich das erfindungsgemäße Verfahren gemäß der zweiten Ausführungsform dadurch aus, dass es die Umsetzung eines Biphenol-Derivates **20** mit einem Chlorophosphit der allgemeinen Struktur **50** oder **60** einschließt.

Gemäß einer dritten Ausführungsform des erfindungsgemäßen Verfahrens zur Herstellung von Verbindungen, die eine Struktur gemäß Formel **I** oder **II** aufweisen, erfolgt die Veresterung, die gemäß der ersten beiden Ausführungsformen jeweils die erste Synthesestufe des Verfahrens gebildet hat, erst in der letzten Synthesestufe.

In Reaktionsschema 3a ist die Herstellung von Monophosphitverbindungen mit einer Struktur gemäß Formel **I** gemäß der dritten Ausführungsform des Verfahrens dargestellt::

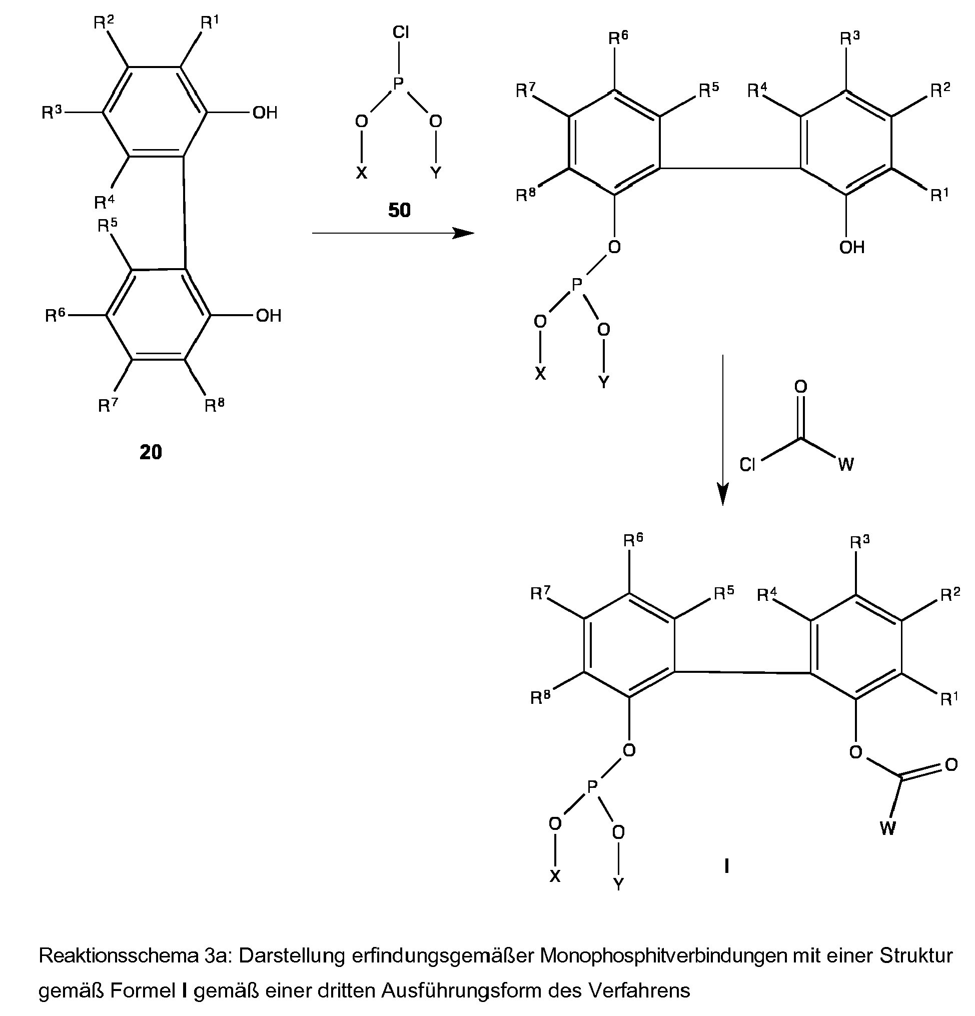

In der ersten Stufe der in Reaktionsschema 3a gezeigten Synthese von Verbindungen mit einer Struktur gemäß Formel **I** wird ein Biphenol-Derivat **20** mit einem Chlorophosphit **50** zu einer Monophosphitverbindung umgesetzt, die sich von einer erfindungsgemäßen Monophosphitverbindung mit einer Struktur gemäß Formel **I** nur dadurch unterscheidet, dass sie in para-Stellung zu dem Substituenten R³ anstelle einer Estergruppe eine Hydroxylgruppe aufweist. In der zweiten Synthesestufe erfolgt dann die Veresterung in para-Stellung zu dem Substituenten R³ durch Reaktion mit einem die Gruppe W aufweisenden Carbonsäurechlorid (wobei W definiert ist wie im Zusammenhang mit Formel **I** angegeben). Als Reaktionsprodukt wird eine Verbindung mit einer Struktur gemäß Formel **I** erhalten.

Für Monophosphitverbindungen gemäß Formel **II** ist der Syntheseweg gemäß der dritten Ausführungsform in Reaktionsschema 3b dargestellt:

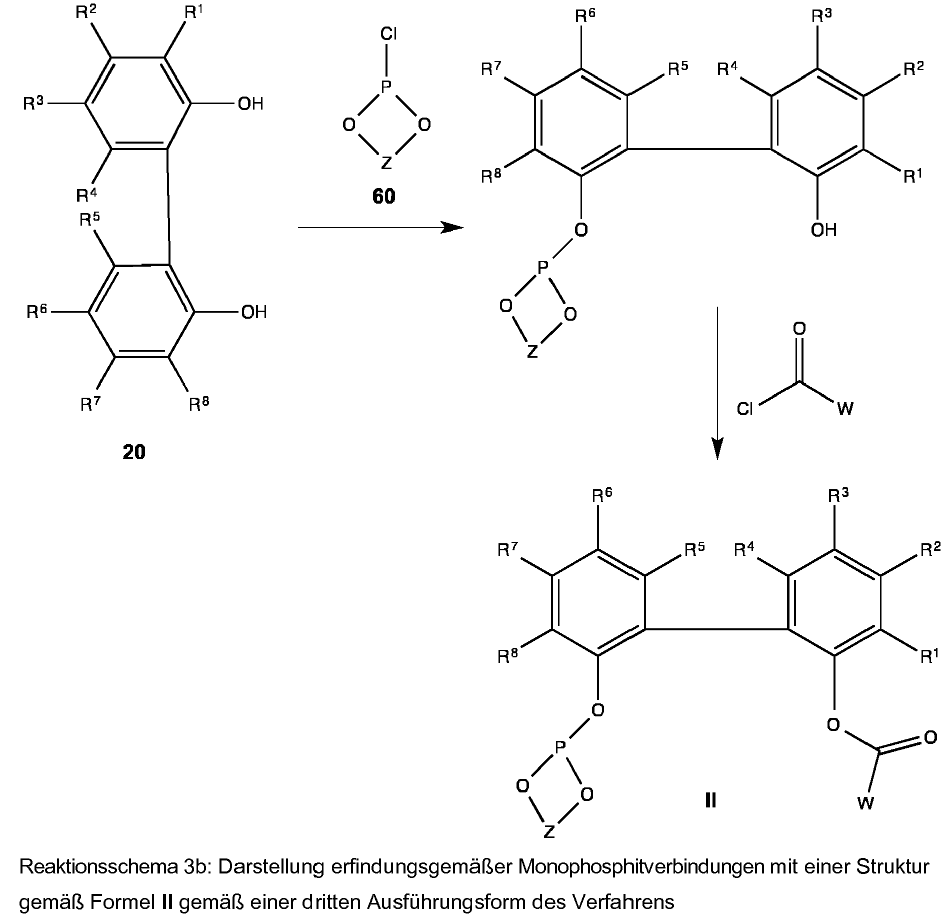

In der ersten Stufe der in Reaktionsschema 3b gezeigten Synthese von Verbindungen mit einer Struktur gemäß Formel **II** wird ein Biphenol-Derivat **20** mit einem Chlorophosphit **60** zu einer Monophosphitverbindung umgesetzt, die sich von einer erfindungsgemäßen Monophosphitverbindung mit einer Struktur gemäß Formel **II** nur dadurch unterscheidet, dass sie in para-Stellung zu dem Substituenten R³ anstelle einer Estergruppe eine Hydroxylgruppe aufweist. In der zweiten Synthesestufe erfolgt dann die Veresterung in para-Stellung zu dem Substituenten R³ durch Reaktion mit einem die Gruppe W aufweisenden Carbonsäurechlorid (wobei W definiert ist wie im Zusammenhang mit Formel **I** angegeben), wodurch eine Verbindung mit einer Struktur gemäß Formel **II** erhalten wird.

Die Substituenten R¹, R², R³, R⁴, R⁵, R⁶, R⁷, R⁸, W, X, Y und Z sind in der vorliegenden Anmeldung nicht in jeder gezeigten allgemeinen Struktur neu definiert. Es ist aber beabsichtigt, dass die Substituenten R¹, R², R³, R⁴, R⁵, R⁶, R⁷, R⁸, W, X, Y und Z in jeder allgemeinen Struktur, in der sie enthalten sind, identisch zu der im Zusammenhang mit den Formeln **I** und **II** gegebenen Definition definiert sind.

Die Erfindung betrifft außerdem die Verwendung einer Verbindung mit einer Struktur gemäß Formel **I** oder **II** als Ligand in einem Ligand-Metall-Komplex zur Katalyse von Hydroformylierungsreaktionen sowie ein Hydroformylierungsverfahren, bei dem die Verbindung als Ligand in einem Ligand-Metall-Komplex zur Umsetzung eines Olefins zu einem Aldehyd eingesetzt wird.

Erfindungsgemäße Komplexe umfassen ein Metallatom oder -ion und zumindest eine Monophosphitverbindung mit einer Struktur gemäß Formel **I** oder Formel **II** als Liganden. Das Metallatom oder -ion kann dabei insbesondere ausgewählt sein, aus der Gruppe, die Rhodium, Cobalt, Iridium und Ruthenium umfasst. Besonders bevorzugt ist das Metallatom oder-ion Rhodium. Optional kann der erfindungsgemäße Komplex auch zwei oder mehr Monophosphitverbindungen mit einer Struktur gemäß Formel **I** und/oder Formel **II** als Liganden aufweisen, wobei die Monophosphitverbindungen eine identische oder unterschiedliche Struktur aufweisen können.

Siehe hierzu R. Franke, D. Selent, A. Börner, "Applied Hydroformylation", Chem. Rev., 2012, DOI:10.1021/cr3001803; S. 5688 Schema 12 "General Method for the Preparation of a P-Modified Rh precatalyst" und darin zitierte Literaturstellen sowie P. W. N. M. van Leeuwen, in Rhodium Catalyzed Hydroformylation, P. W. N. M. van Leeuwen, C. Claver (Hrsg.), Kluwer, Dordrecht, 2000 unter anderem S. 48 ff, S.233 ff. und darin zitierte Literaturstellen sowie K.D. Wiese und D. Obst in Top. Organomet. Chem. 2006, 18, 1-13; Springer Verlag Berlin Heidelberg 2006 S. 6 ff sowie darin zitierte Literaturstellen.

Ein besonderer Vorteil erfindungsgemäßer Monophosphitverbindungen und erfindungsgemäßer Komplexe in der Hydroformylierung ist, dass diese auch bei der Umsetzung technischer Olefingemische zu Aldehyden als Liganden bzw. Katalysatoren verwendet werden können. Bevorzugt zeichnen sich erfindungsgemäße Monophosphitverbindungen und diese aufweisende Komplexe bei der Verwendung in Hydroformylierungsreaktionen darüber hinaus durch eine gute bis sehr gute Ausbeute aus.

Das Hydroformylierungsverfahren, bei dem erfindungsgemäße Monophosphitverbindungen als Ligand zur Umsetzung eines Olefins zu einem Aldehyd eingesetzt werden, umfasst die folgenden Verfahrensschritte:
a) Vorlegen eines Olefins,
b) Zugabe eines erfindungsgemäßen Komplexes oder alternativ einer erfindungsgemäßen Verbindung sowie einer ein Metallatom oder Metallion enthaltenden Verbindung, wobei das Metallatom oder Metallion vorzugsweise ausgewählt ist aus Rh, Ru, Co und Ir,
c) Zuführen von H₂ und CO,
d) Erwärmen des Reaktionsgemisches, wobei das Olefin zu einem Aldehyd umgesetzt wird.

Die Verfahrensschritte a) bis d) können dabei in beliebiger Reihenfolge erfolgen.

Die Reaktion wird bei üblichen Bedingungen durchgeführt, die dem Fachmann hinreichend bekannt sind.

Bevorzugt sind eine Temperatur von 80 °C bis 160 °C und ein Druck von 1 bis 300 bar. Besonders bevorzugt sind eine Temperatur von 100 °C bis 160 °C und ein Druck von 15 bis 250 bar.

In einer bevorzugten Ausführungsform ist das Metall Rh.

Mit dem erfindungsgemäßen Verfahren können unter Verwendung der erfindungsgemäßen Verbindungen α-Olefine, endständig verzweigte, innenständige und innenständig verzweigte Olefine hydroformyliert werden.

Die Edukte für die Hydroformylierung gemäß dem Verfahren der Erfindung sind Olefine oder Gemische von Olefinen, insbesondere Monoolefine mit 2 bis 24, bevorzugt 3 bis 16, besonders bevorzugt 3 bis 12 Kohlenstoffatomen mit end- oder innenständigen C-C-Doppelbindungen, wie z.B. 1-Propen, 1-Buten, 2-Buten, 1-oder 2-Penten, 2-Methyl-1-buten, 2-Methyl-2-buten, 3-Methyl-1-buten, 1-, 2- oder 3,-Hexen, das bei der Dimerisierung von Propen anfallende C₆-Olefingemisch (Dipropen), Heptene, 2- oder 3-Methyl-1-hexene, Octene, 2-Methylheptene, 3-Methylheptene, 5-Methyl-2-hepten, 6-Methyl-2-hepten, 2-Ethyl-1-hexen, das bei der Dimerisierung von Butenen anfallende C₈-Olefingemisch (Di-n-buten, Di-iso-buten), Nonene, 2- oder 3-Methyloctene, das bei der Trimerisierung von Propen anfallende C₉-Olefingemisch (Tripropen), Decene, 2-Ethyl-1-octen, Dodecene, das bei der Tetramerisierung von Propen oder der Trimerisierung von Butenen anfallende C₁₂-Olefingemisch (Tetrapropen oder Tributen), Tetradecene, Hexadecene, das bei der Tetramerisierung von Butenen anfallende C₁₆-Olefingemisch (Tetrabuten) sowie durch Cooligomerisierung von Olefinen mit unterschiedlicher Anzahl von Kohlenstoffatomen (bevorzugt 2 bis 4) hergestellte Olefingemische.

Die Erfindung wird nun genauer anhand von Ausführungsbeispielen und mit Bezug auf die Figuren beschrieben, die schematisch
- in Figur 1 den Syntheseweg einer erfindungsgemäßen Monophosphitverbindung gemäß einer ersten Ausführungsform des erfindungsgemäßen Herstellungsverfahrens,
- in Figur 2 den Syntheseweg einer erfindungsgemäßen Monophosphitverbindung gemäß einer zweiten Ausführungsform des erfindungsgemäßen Herstellungsverfahrens, und
- in Figur 3 den Syntheseweg einer erfindungsgemäßen Monophosphitverbindung gemäß einer dritten Ausführungsform des erfindungsgemäßen Herstellungsverfahrens zeigen.

Die Synthese relevanter Estergruppen wird u.a. in "P. G. M. Wuts, T. W. Greene "Greenes's

Protective Groups in Organic Synthesis", fourth edition, 2007, John Wiley and Sons; Hoboken, New Jersey" sowie in darin zitierten Literaturstellen behandelt. Weitere Literaturstellen zur Synthese ausgewählter Estergruppen, in denen der Substituent W wie nachstehend angegeben definiert ist, werden im Folgenden gegeben:
- -CH₂CH₂COCH₃ (P. G. M. Wuts, T. W. Greene "Greene's Protective Groups in Organic Synthesis", fourth edition, 2007, John Wiley and Sons; Hoboken, New Jersey S. 413),
- -C(CH₃)₃ (Piv) (L.K.T. Lam, K. Farhat, Org. Prep. Proced. Int., 10, 79, 1978),
- -C₆H₅ (P.A. Stadler, Helv. Chim. Acta, 61, 1675, 1978),
- -9-fluoren ( G. M. Wuts, T. W. Greene "Greene's Protective Groups in Organic Synthesis", fourth edition, 2007, John Wiley and Sons; Hoboken, New Jersey S. 416).

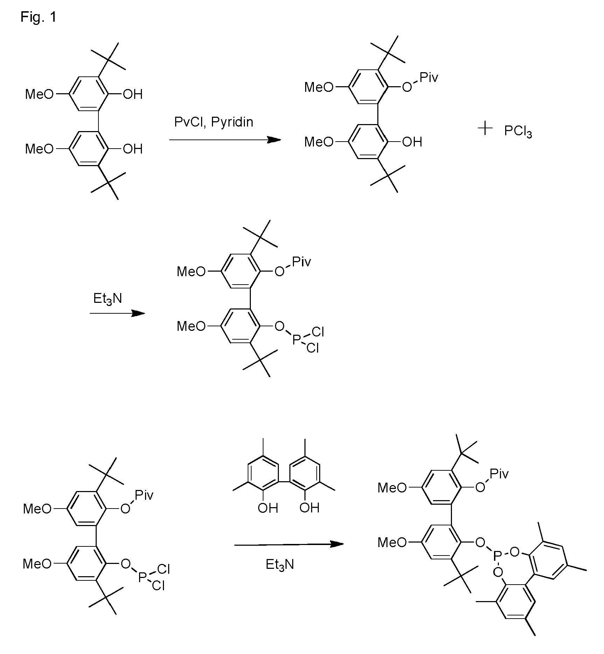

Die Figur 1 zeigt den Syntheseweg einer Verbindung mit einer Struktur gemäß der allgemeinen Formel III gemäß einer ersten Ausführungsform des erfindungsgemäßen Herstellungsverfahrens.

In der ersten Synthesestufe wird 3,3'-Di-*tert-*butyl-5,5'-dimethoxy-[1,1'-biphenyl]-2,2'-diol mit Pivaloylchlorid und Pyridin zu dem entsprechenden *tert*-butyl-ester umgesetzt. Dieser wird in der zweiten Synthesestufe mit Phosphortrichlorid in Anwesenheit von Triethylamin zu dem entsprechenden Chlorophosphit umgesetzt, welches in der gezeigten Ausführungsform mit 3,3',5,5'-Tetramethyl-(1,1'-biphenyl)-2,2'-diol in Anwesenheit von Triethylamin zu dem erfindungsgemäßen Monophosphit mit einer Estergruppe gemäß der allgemeinen Formel **III** umgesetzt wird.

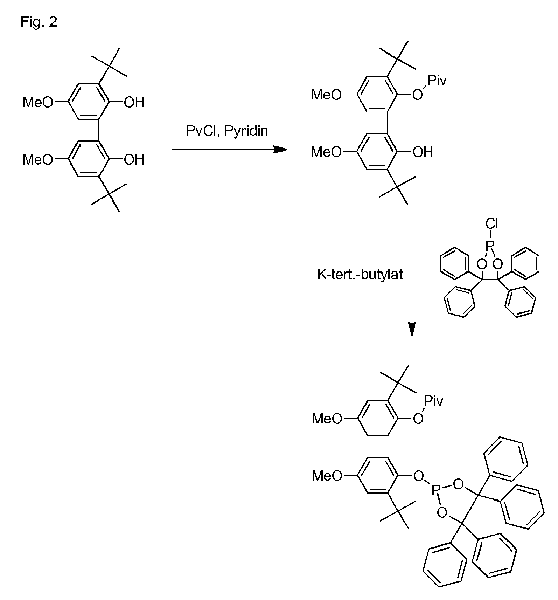

In der in Figur 2 gezeigten Ausführungsform des erfindungsgemäßen Herstellungsverfahrens von Monophosphitverbindungen gemäß der allgemeinen Struktur **II** wird 3,3'-di-tert-butyl-5,5'-dimethoxy-[1,1'-biphenyl]-2,2'-diol analog des in Figur 1 gezeigten Syntheseweges mit Pivaloylchlorid und Pyridin zu dem entsprechenden Tert-butyl-ester umgesetzt. Dieser wird nun jedoch abweichend von dem in Figur 1 gezeigten Syntheseweg nicht erst zu einem Chlorophosphit umgesetzt, sondern in Anwesenheit von Kalium-tert.-butylat mit einem Chlorophosphit umgesetzt, wodurch die erfindungsgemäße Monophosphitverbindung mit einer Estergruppe gemäß der allgemeinen Formel **II** erhalten wird.

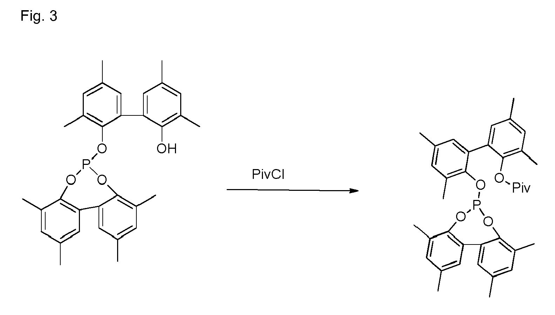

Die Figur 3 zeigt die letzte Synthesestufe einer Verbindung mit einer Struktur gemäß der allgemeinen Formel **III** gemäß einer dritten Ausführungsform des erfindungsgemäßen Herstellungsverfahrens, in der der Schritt der Esterbildung erst zum Schluss erfolgt. In der gezeigten Ausführungsform wird ein Monophosphit, das von einem erfindungsgemäßen Monophosphit nur dadurch abweicht, dass es anstelle der Estergruppe eine Hydroxylgruppe aufweist, mit Pivaloylchlorid zu einer erfindungsgemäßen Monophosphitverbindung mit einer Estergruppe gemäß der allgemeinen Formel **III** umgesetzt.

Im Folgenden wird nun die Synthese ausgewählter Chlorophosphite beschrieben:
6-Chlorodibenzo[*d*,*f*][1,3,2]dioxaphosphepin wurde nach DE 10 2008 043 584 und 2-Chloro-4,4,5,5-tetraphenyl-1,3,2-dioxaphospholan nach DE 10 2006 058 682 hergestellt.

Die Herstellung von 2,2'-Bis-(3,5-ditert.-butyl)-phenol-chlorophosphit erfolgte nach folgender Vorschrift::

### Beispiel 1: Darstellung von 2,2'-Bis-(3,5-ditert.-butyl)-phenol-chlorophosphit

In einem sekurierten 500 mL Schlenkkolben wurden 41g (0,1 mol) 2,2'-Bis-(3,5-ditert.-butyl)-phenol und 30,7 g (42,3 mL; 0,3 mol) getrocknetes Triethylamin in 300 mL getrocknetem Toluol gelöst. In einem zweiten sekurierten Schlenkkolben (1000 mL) löste man 13,9 g (8,8 mL; 0,1 mol) Phosphortrichlorid in 600 mL getrocknetem Toluol und tropfte unter kräftigem Rühren zu dieser Lösung langsam und stetig bei einer Temperatur zwischen -5 und 0 °C die zuvor hergestellte Diphenol-Triethylamin-Toluol-Lösung hinzu. Die Lösung ließ man über Nacht auf Raumtemperatur erwärmen. Das entstehende Ammoniumchlorid wurde abfiltriert und das Lösemittel unter vermindertem Druck bis zur Trockene eingeengt. Das Produkt konnte in 98%iger Ausbeute erhalten werden (47 g).

Alle anderen Chlorophosphite lassen sich in analoger Weise, d.h. durch Zusatz von Phosphortrichlorid in Gegenwart einer Base, herstellen. Siehe hierzu auch "Phosphorous(III) Ligands in Homogeneous Catalysis - Design and Synthesis" von Paul C.J. Kamer und Piet W.N.M. van Leeuwen; John Wiley and Sons, 2012; unter anderem S. 94 ff. und darin zitierte Literaturstellen.

## Patentansprüche

1. Verbindung, welche eine der beiden allgemeinen Strukturen **I** oder **II** aufweist: 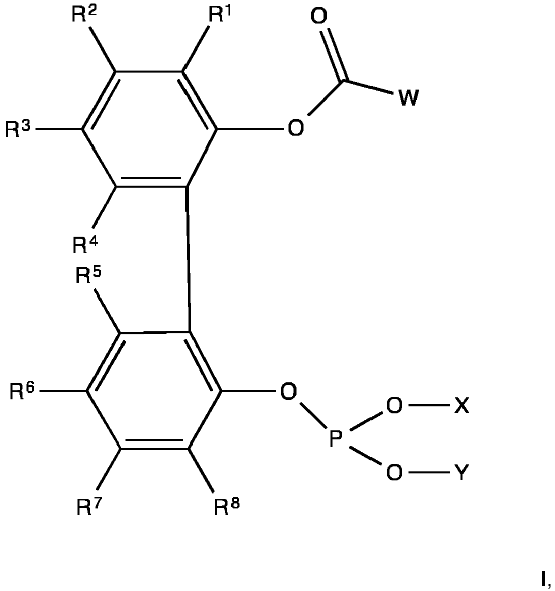 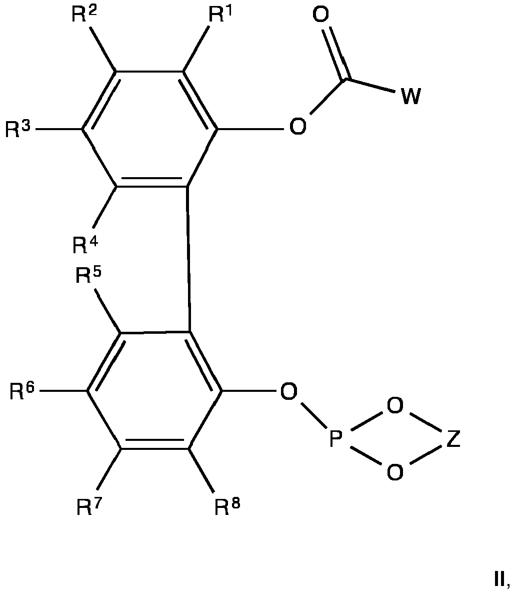
wobei W ausgewählt ist aus: -(C₁-C₁₂)-Alkyl, -(C₆-C₂₀)-Aryl, -CH₂CH₂COCH₃, -C(CH₃)₃, -C₆H₅, -9-fluoren;
wobei R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
wobei X und Y jeweils unabhängig voneinander ausgewählt sind aus: -(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)Alkyl,-(C₁-C₁₂)-Alkyl-(C₆-C₂₀)-Aryl, -(C₆-C₂₀)-Aryl-COO-( C₁-C₁₂)-Alkyl, -(C₆-C₂₀)-Aryl-CONH-(C₁-C₁₂)-Alkyl, -(C₆-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₅-C₈)-Heterocycloalkyl, -(C₆-G₂₀)-Aryl-CO-(C₆-C₂₀)-Aryl;
wobei Z ausgewählt ist aus: -(C₁-C₁₂)-Alkyl-, -(C₆-C₂₀)-Aryl-, -(C₆-C₂₀)-Aryl-(Cl-C₁₂)-Alkyl-, -(C₁-C₁₂)Alkyl-(C₆-C₂₀)-Aryl-, -(C₄-C₂₀)-Heteroaryl-, -(C₆-C₂₀)-Aryl-CO-(C₆-C₂₀)-Aryl-, -(C₆-C₂₀)-Aryl-(C₆-C₂₀)-Aryl-.
und wobei die genannten Alkyl-, Heteroalkyl-, Cycloalkyl-, Heterocycloalkyl-, Aryl- und Heteroarylgruppen substituiert sein können.

2. Verbindung nach Anspruch 1,
wobei X und Y jeweils unabhängig voneinander ausgewählt sind aus:
-(C₁-C₁₂)-Alkyl, -(C₆-C₂₀)-Aryl, -(C₆-C₂₀)-Aryl-(C₁-C₁₂)-Alkyl, -(C₁-C₁₂)-Alkyl-(C₆-C₂₀)-Aryl, -(C₄-C₂₀)-Heteroaryl und -(C₅-C₈)-Cycloalkyl.

3. Verbindung nach einem der Ansprüche 1 oder 2,
wobei Z ausgewählt ist aus:
-(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl- und - (C₆-C₂₀)-Aryl-(C₆-C₂₀)-Aryl-.

4. Verbindung nach einem der Ansprüche 1 bis 3,
wobei W ausgewählt ist aus:
- CH₂CH₂COCH₃, -C₆H₅ und -C(CH₃)₃.

5. Verbindung nach Anspruch 1, welche die allgemeine Struktur **III** aufweist: 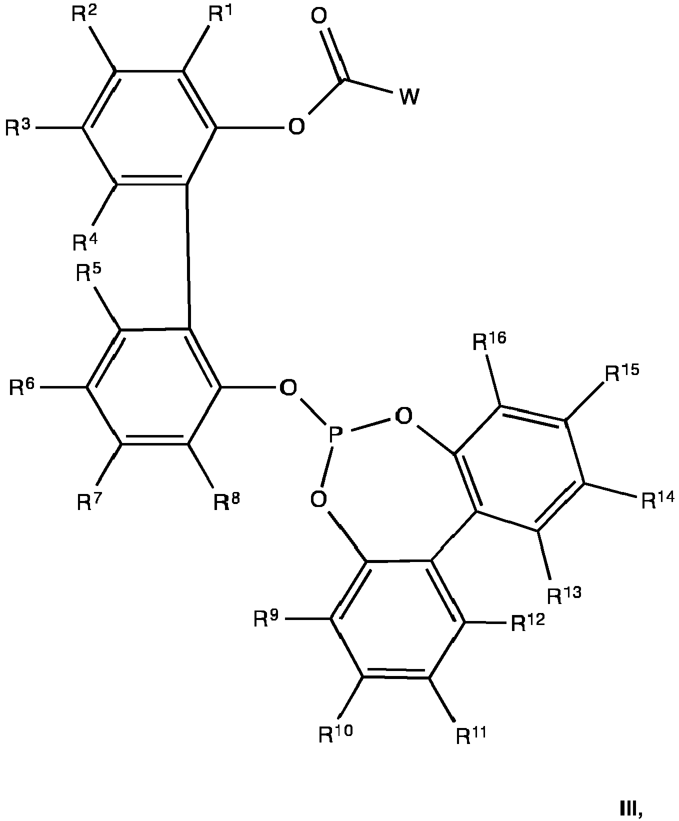
wobei W ausgewählt ist aus:
- (C₁-C₁₂)-Alkyl, -(C₆-C₂₀)-Aryl, -CH₂CH₂COCH₃, -C(CH₃)₃, -C₆H₅, -9-fluoren;
wobei R¹, R², R³, R⁴, R⁵, R⁶, R⁷, R⁸ jeweils unabhängig voneinander ausgewählt sind aus:
- H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
und wobei R⁹, R¹⁰, R¹¹, R¹², R¹³, R¹⁴, R¹⁵, R¹⁶ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

6. Verbindung nach Anspruch 5,
wobei W ausgewählt ist aus:
- CH₂CH₂COCH₃, -C₆H₅ und -C(CH₃)₃.

7. Verfahren zur Herstellung einer Verbindung, welche eine der beiden allgemeinen Strukturen **I** oder **II** aufweist: 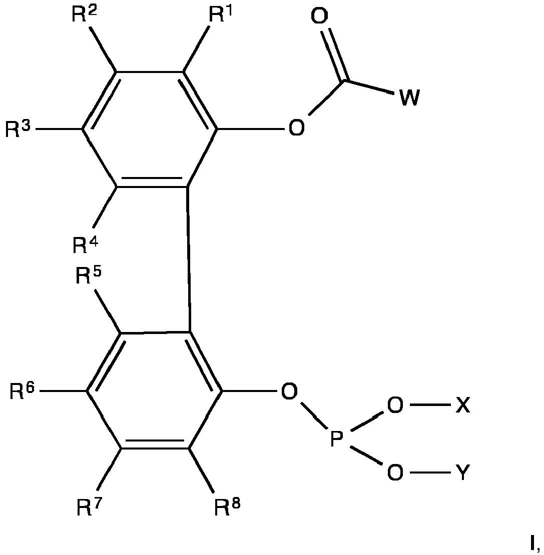 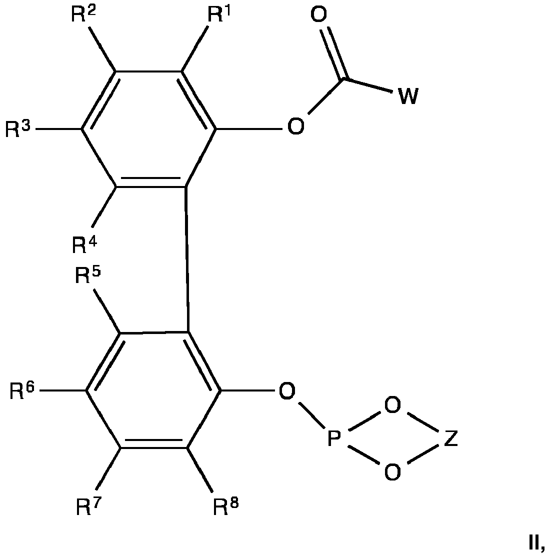
wobei W ausgewählt ist aus:
-(C₁-C₁₂)-Alkyl, -(C₆-C₂₀)-Aryl, -CH₂CH₂COCH₃, -C(CH₃)₃, -C₆H₅, -9-fluoren;
wobei R¹, R², R³, R⁴, R⁵, R⁶, R⁷, R⁸ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁C₁₂)-Alkyl]₂;
wobei X und Y jeweils unabhängig voneinander ausgewählt sind aus:
- (C₁-C₁₂)-Alkyl, -(C₆-C₂₀)-Aryl, -(C₆-C₂₀)-Aryl-(C₁-C₁₂)-Alkyl, -(C₆-C₂₀)-Arl-O-(C₁-C₁₂)-Alkyl, (C₁-C₁₂)-Alkyl-(C₆-C₂₀)-Aryl, -(C₆-C₂₀)-Aryl-COO-(C₁-C₁₂)-Alkyl, -(C₆-C₂₀)-Aryl-CONH-(C₁-C₁₂)-Alkyl, -(O₆-O₂₀)-Aryl-OON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₅-C₈)-Heterocycloalkyl, -(C₆-C₂₀)-Aryl-CO-(C₆-C₂₀)-Aryl;
und wobei Z ausgewählt ist aus:
-(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀)-Aryl-CO-(C₆-C₂₀)-Aryl-, -(C₆-C₂₀)-Aryl-(C₆-C₂₀)-Aryl-;
wobei das Verfahren die folgenden Schritte umfasst:
a) Vorlegen eines Eduktes,
b) Zugabe eines Carbonsäurechlorids,
c) Zugabe einer Verbindung, die Phosphor und Chlor enthält,
d) Erhalten eines Produktes.

8. Verfahren nach Anspruch 7, wobei ein Zwischenprodukt mit einer Struktur gemäß Formel 40 gebildet wird 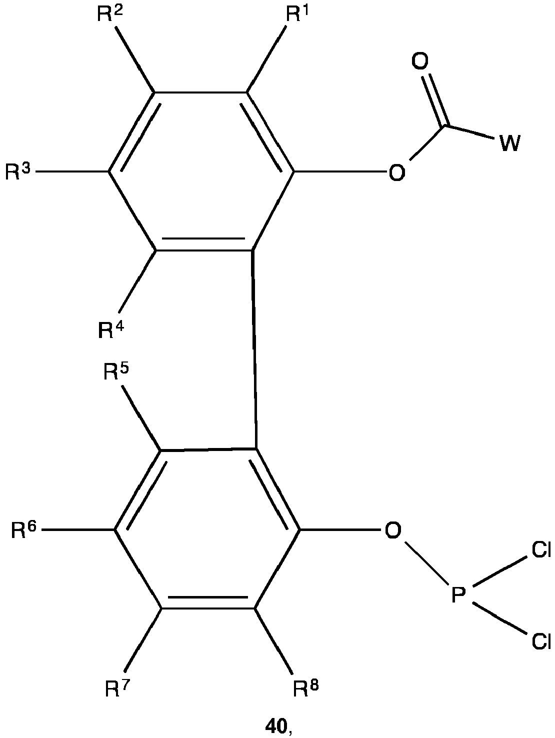
wobei W ausgewählt ist aus:
- (C₁-C₁₂)-Alkl, -(C₆-C₂₀)-Aryl, -CH₂CH₂COCH₃, -C(CH₃)₃, -C₆H₅, -9-fluoren;
und wobei R¹, R², R³, R⁴, R⁵, R⁶, R¹¹, R⁸ jeweils unabhängig voneinander ausgewählt sind aus:
- H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

9. Verfahren nach Anspruch 7, wobei als Edukt eine Verbindung mit einer Struktur gemäß Formel 20 eingesetzt wird 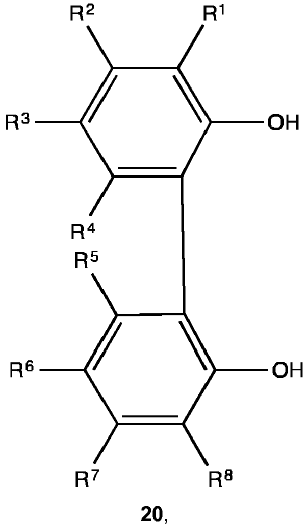
wobei R¹, R², R³, R⁴, R⁵, R⁶, R⁷, R⁸ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
und wobei die Phosphor und Chlor enthaltende Verbindung ein Chlorophosphit ist, das eine Struktur gemäß Formel 50 aufweist 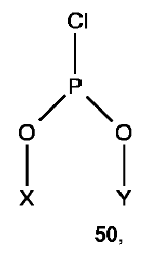
wobei X und Y jeweils unabhängig voneinander ausgewählt sind aus:
-(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl,-(C₁-C₁₂)-Alkyl-(C₆-C₂₀)-Aryl, -(C₆-C₂₀)-Aryl-COO-(C₁-C₁₂)-Alkyl, -(C₆-C₂O)-Aryl-CONH-(C₁-C₁₂)-Alkyl, -(O₆-O₂₀)-Aryl-OON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₅-C₈)-Heterocycloalkyl, -(C₆-C₂₀)-Aryl-CO-(C₆-C₂₀)-Aryl.

10. Verfahren nach Anspruch 7, wobei als Edukt eine Verbindung mit einer Struktur gemäß Formel 20 eingesetzt wird 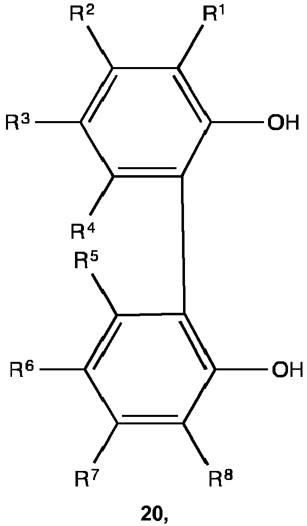
wobei R¹, R², R³, R⁴, R⁵, R⁶, R⁷, R⁸ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂;
und wobei die Phosphor und Chlor enthaltende Verbindung ein Chlorophosphit ist, das eine Struktur gemäß Formel 60 aufweist 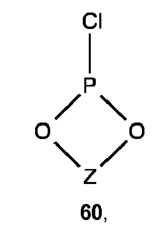
wobei Z ausgewählt ist aus:
-(C₁-C₁₂)-Alkyl-, -(C₆-C₂₀)-Aryl-, -(C₆-C₂₀)-Aryl-(C₁-C₁₂)-Alkyl-, -(C₁-C₁₂)Alkyl-(C₆-C₂₀)Aryl-, -(C₄-C₂₀)-Heteroaryl-, -(C₆-C₂₀)-Aryl-CO-(C₆-C₂₀)-Aryl-, -(C₆-C₂₀)-Aryl-(C₆-C₂₀)-Aryl-.

11. Verfahren nach einem der Ansprüche 7 bis 10, wobei ein Zwischenprodukt mit einer Struktur gemäß Formel 30 gebildet wird 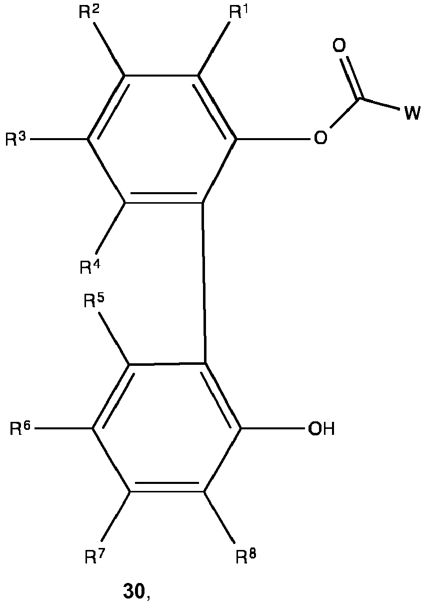
wobei W ausgewählt ist aus:
-(C₁-C₁₂)-Alkyl, -(C₆-C₂₀)-Aryl, -CH₂CH₂COCH₃, -C(CH₃)₃, -C₆H₅, -9-fluoren;
und wobei R¹, R², R³, R⁴, R⁵, R⁶, R¹¹, R⁸ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Cl, -F, -Br, -I, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂

12. Komplex, umfassend ein Metallatom oder -ion und zumindest eine Verbindung nach einem der Ansprüche 1 bis 6.

13. Komplex nach Anspruch 12, wobei das Metallatom oder -ion ausgewählt ist aus der Gruppe, die Rh, Ru, Co und Ir umfasst.

14. Verwendung einer Verbindung nach einem der Ansprüche 1 bis 6 oder eines Komplexes nach einem der Ansprüche 12 oder 13 in der Hydroformylierung von (C₂-C₂₄)-Olefinen.

15. Verwendung nach Anspruch 14, wobei die Hydroformylierungsreaktion die folgenden Schritte umfasst:
a) Vorlegen eines Olefins,
b) Zugabe eines Komplexes nach einem der Ansprüche 12 oder 13, oder einer Verbindung nach einem der Ansprüche 1 bis 6 sowie einer ein Metallatom oder Metallion enthaltenden Verbindung,
c) Zuführen von H₂ und CO,
d) Erwärmen des Reaktionsgemisches, wobei das Olefin zu einem Aldehyd umgesetzt wird.
